# EUROPÄISCHE PATENTANMELDUNG

(11) **EP 4 679 687 A1**
(43) Veröffentlichungstag der Anmeldung: **14.01.2026**
(21) Anmeldenummer: 24187468.4
(22) Anmeldetag: 09.07.2024
(51) Int. Cl.: H02K 15/02, H02K 1/14

(54) **ELEKTRISCHE MASCHINE MIT STATOR-JOCH-PAKET AUS DÜNNEN GESINTERTEN BLECHEN**

(71) Anmelder: Siemens Aktiengesellschaft, 80333 München (DE)
(72) Erfinder: Oestreich, Markus, 36110 Schlitz (DE); Seufert, Reiner, 97616 Salz (DE); Vollmer, Rolf, 36129 Gersfeld (DE)
(74) Vertreter: Siemens Patent Attorneys

(57) **Zusammenfassung**

Zum Herstellen eines Stator-Joch-Pakets einer elektrischen Maschine werden Sternteile (16) in einer Stapelrichtung (z) zu einem Sternpaket (19) mit einem inneren Ring und einem von dem inneren Ring nach radial außen ragenden Zähnen gestapelt und werden Jochteile (17) in der Stapelrichtung (z) zu einem Jochpaket (22) gestapelt. Nach einem Bewickeln der nach radial außen ragenden Zähne mit einer Statorwicklung (21) werden das Sternpaket (19) und das Jochpaket (22) miteinander verbunden werden, so dass das Jochpaket (22) das Sternpaket (19) radial außen umgibt. Zum Herstellen der Sternteile (16) und der Jochteile (17) werden aus einer Paste (1), die aus weichmagnetischen Pulverpartikeln (3) und einem Bindemittel (4) besteht, Schichten (2) erzeugt. Die Schichten (2) werden getrocknet und sodann gesintert, so dass die Schichten (2) jeweils ein Blech (7, 7', 7") mit einer Schichtdicke (d1) bilden. Die Bleche (7, 7', 7") werden zu Kleinstapeln (8) mit einer jeweiligen Stapeldicke (d2) verbunden, wobei der jeweilige Kleinstapel (8) in der Stapelrichtung (z) mehrere aufeinander gestapelte Bleche (7, 7', 7") umfasst. Die Kleinstapel (8) werden durch materialabtragende Bearbeitung konturiert und in die Sternteile (16) und die Jochteile (17) getrennt.

## Beschreibung

Die vorliegende Erfindung geht aus von einem Herstellungsverfahren für ein Stator-Joch-Paket einer elektrischen Maschine,
- wobei Sternteile in einer Stapelrichtung zu einem Sternpaket mit einem inneren Ring und einem von dem inneren Ring nach radial außen ragenden Zähnen gestapelt werden und Jochteile in der Stapelrichtung zu einem Jochpaket gestapelt werden,
- wobei nach einem Bewickeln der nach radial außen ragenden Zähne mit einer Statorwicklung das Sternpaket und das Jochpaket miteinander verbunden werden, so dass das Jochpaket das Sternpaket radial außen umgibt.

Die vorliegende Erfindung geht weiterhin aus von einem Stator-Joch-Paket einer elektrischen Maschine,
- wobei das Stator-Joch-Paket ein Sternpaket mit einem inneren Ring und einem von dem inneren Ring nach radial außen ragenden Zähnen und ein das Sternpaket radial außen umgebendes und mit dem Sternpaket verbundenes Jochpaket aufweist,
- wobei die nach radial außen ragenden Zähne mit einer Statorwicklung bewickelt sind,
- wobei das Sternpaket aus einer Mehrzahl von in einer Stapelrichtung aufeinandergestapelten Sternteilen besteht und das Jochpaket aus einer Mehrzahl von in der Stapelrichtung aufeinandergestapelten Jochteilen besteht.

Elektrische Maschinen, bei denen der Stator als Stern-Joch-Paket ausgebildet ist, sind allgemein bekannt.

Elektrische Maschinen, bei denen der Stator als Stern-Joch-Paket ausgebildet ist, weisen als wesentlichen Vorteil auf, dass die Zähne von radial außen bewickelt werden können, weil das Jochpaket erst nach dem Bewickeln der Zähne mit der Statorwicklung mit dem Sternpaket verbunden wird. Das Sternpaket muss arm an magnetischer Streuung sein und für den Fügeprozess von Sternpaket und Lochpaket eine hohe Steifigkeit aufweisen.

Eine Aufgabe der vorliegenden Erfindung besteht darin, ein derartiges Stern-Joch-Paket auf einfache Art und Weise herzustellen. Eine weitere Aufgabe der vorliegenden Erfindung besteht darin, ein entsprechendes Stern-Joch-Paket zu schaffen.

Die Aufgabe wird durch ein Herstellungsverfahren mit den Merkmalen des Anspruchs 1 gelöst. Vorteilhafte Ausgestaltungen des Herstellungsverfahrens sind Gegenstand der abhängigen Ansprüche 2 bis 8.

Erfindungsgemäß wird ein Herstellungsverfahren der eingangs genannten Art dadurch ausgestaltet,
- dass aus einer Paste, die aus weichmagnetischen Pulverpartikeln und einem Bindemittel besteht, Schichten erzeugt werden,
- dass die Schichten getrocknet und sodann gesintert werden, so dass die Schichten jeweils ein Blech mit einer Schichtdicke bilden,
- dass die Bleche zu Kleinstapeln mit einer jeweiligen Stapeldicke verbunden werden, wobei der jeweilige Kleinstapel in der Stapelrichtung mehrere aufeinander gestapelte Bleche umfasst, und
- dass die Kleinstapel durch materialabtragende Bearbeitung konturiert und in die Sternteile und die Jochteile getrennt werden.

Im Unterschied zu üblichen Blechen einer elektrischen Maschine sind die Bleche also nicht durch Walzen, sondern durch Sintern hergestellt. Das Sintern erfolgt in einem Ofen. In dem Ofen (oder einem anderen Ofen) werden vor dem Sintern gegebenenfalls auch Reste des Bindemittels entfernt, insbesondere durch Ausdampfen. Das Bindemittel, das für die Paste benötigt wird, kann insbesondere ein flüssiges Bindemittel sein.

Die materialabtragende Bearbeitung der Kleinstapel dient idealerweise nur noch der finalen Konturierung, die mittels der Sinterung nicht gewährleistet werden kann. Es kann sich aber auch um einen Abtragen von Material in nennenswertem Umfang handeln. Die materialabtragende Bearbeitung kann beispielsweise ein Stanzen, ein Erodieren oder ein (Laser-)Schneiden sein. Das Konturieren und das Trennen in das Sternteil und das Jochteil erfolgen vorzugsweise in einem gemeinsamen Arbeitsgang. Sie können aber auch in voneinander getrennten Arbeitsgängen erfolgen.

Im Rahmen des Herstellungsverfahrens werden also zunächst Kleinstapel hergestellt, aus denen sowohl die Sternteile als auch die Jochteile gebildet werden. Das Stapeln der Sternteile zum Sternpaket und der Jochteile zum Jochpaket erfolgt sodann getrennt voneinander. Beim Stapeln werden die Sternteile fest miteinander verbunden und werden auch die Jochteile fest miteinander verbunden.

Vorzugsweise werden die Bleche zum Verbinden zu dem jeweiligen Kleinstapel nicht verformt. Die Bleche weisen also sowohl vor als auch nach dem Verbinden zu dem jeweiligen Kleinstapel zum einen die einheitliche Schichtdicke und zum anderen eine plane Struktur ohne Erhebungen und Vertiefungen auf. Diese Ausgestaltung hat fertigungstechnische Vorteile.

Zum Verbinden mehrerer Bleche zu dem jeweiligen Kleinstapel ist vorzugsweise vorgesehen, dass
- die Bleche jeweils mindestens einseitig mit einem Klebelack, beispielsweise einem Backlack, beschichtet werden,
- der Klebelack getrocknet wird,
- die mit dem Klebelack beschichteten Bleche aufeinander gestapelt und aneinander angedrückt werden und
- der Klebelack aktiviert wird, beispielsweise durch Erwärmen.

Diese Vorgehensweise ist besonders einfach und zuverlässig. Auf die Außenseiten der beiden äußersten Bleche des jeweiligen Kleinstapels kann der Klebelack nach Bedarf aufgebracht sein oder auch nicht aufgebracht sein. Zwischen je zwei unmittelbar benachbarten Blechen muss jedoch eine Schicht aus Klebelack vorhanden sein.

Vorzugsweise werden die Sternteile und die Jochteile im Rahmen der Stapelung zum Sternpaket und zum Jochpaket miteinander geklebt. Diese Vorgehensweise ist besonders einfach und zuverlässig.

Vorzugsweise umfassen die Bleche mittlere und äußere Bleche, wobei die mittleren und die äußeren Bleche voneinander verschiedene Konturen aufweisen und die Kleinstapel in der Stapelrichtung gesehen jeweils zunächst eine Anzahl von äußeren Blechen, sodann eine Anzahl von mittleren Blechen und schließlich wieder eine Anzahl von äußeren Blechen aufweisen. Dadurch ist es möglich, mittels der äußeren Bleche an der Oberseite und der Unterseite des jeweiligen Kleinstapels die mechanische Verbindung zu gewährleisten und die mittleren Bleche bezüglich ihrer magnetischen Wirkung zu optimieren.

Vorzugsweise weisen zu diesem Zweck bereits vor dem Konturieren der Kleinstapel die inneren Ringe der mittleren Bleche im Bereich zwischen den nach radial außen ragenden Zähnen einen kleineren Querschnitt auf als die inneren Ringe der äußeren Bleche.

Vorzugsweise werden die Kleinstapel durch das Konturieren der Kleinstapel so weit materialabtragend bearbeitet, dass die inneren Ringe der mittleren Bleche im Bereich zwischen den nach radial außen ragenden Zähnen vollständig abgetragen werden und die inneren Ringe der äußeren Bleche im Bereich zwischen den nach radial außen ragenden Zähnen nicht vollständig abgetragen werden. Dadurch kann ein Sternpaket geschaffen werden, das besonders arm an magnetischer Streuung ist.

Die Schichtdicke und die Stapeldicke können nach Bedarf gewählt sein. Vorzugsweise liegt die Schichtdicke zwischen 20 µm und 400 µm und/oder liegt die Stapeldicke zwischen 200 µm und 1000 µm. In jedem Fall aber ist die Stapeldicke ein ganzzahliges Mehrfaches der Schichtdicke.

Die Aufgabe wird weiterhin durch ein Stator-Joch-Paket einer elektrischen Maschine mit den Merkmalen des Anspruchs 9 gelöst. Vorteilhafte Ausgestaltungen des Stator-Joch-Pakets sind Gegenstand der abhängigen Ansprüche 10 bis 15.

Erfindungsgemäß wird ein Stator-Joch-Paket der eingangs genannten Art dadurch ausgestaltet,
- dass die Sternteile und die Jochteile jeweils mehrere in der Stapelrichtung aufeinander gestapelte und miteinander verbundene Bleche umfassen und eine jeweilige Stapeldicke aufweisen und
- dass die Bleche jeweils aus weichmagnetischen Pulverpartikeln bestehen, die durch Sintern miteinander verbunden sind und eine Schichtdicke aufweisen.

Das Stator-Joch-Paket ist also so ausgestaltet, wie es sich bei Herstellung der Sternteile und der Jochteile gemäß einem erfindungsgemäßen Herstellungsverfahren ergibt.

Vorzugsweise sind die Bleche des jeweiligen Sternteils bzw. des jeweiligen Jochteils nicht verformt. Die Bleche weisen also zum einen die einheitliche Schichtdicke und zum anderen eine plane Struktur ohne Erhebungen und Vertiefungen auf.

Vorzugsweise sind die Bleche des jeweiligen Sternteils bzw. des jeweiligen Jochteils miteinander geklebt. Auf diese Art und Weise sind die Bleche des jeweiligen Sternteils bzw. des jeweiligen Jochteils besonders einfach und zuverlässig herstellbar.

Vorzugsweise sind die Sternteile und die Jochteile miteinander geklebt. Diese Vorgehensweise ist besonders einfach und zuverlässig.

Vorzugsweise umfassen die Bleche der Sternteile mittlere und äußere Bleche, wobei die mittleren und die äußeren Bleche voneinander verschiedene Konturen aufweisen und die Sternteile in der Stapelrichtung gesehen jeweils zunächst eine Anzahl von äußeren Blechen, sodann eine Anzahl von mittleren Blechen und schließlich wieder eine Anzahl von äußeren Blechen aufweisen. Dadurch ist es möglich, mittels der äußeren Bleche an der Oberseite und der Unterseite des jeweiligen Sternteils die mechanische Verbindung zu gewährleisten und die mittleren Bleche bezüglich ihrer magnetischen Wirkung zu optimieren.

Vorzugsweise weisen die inneren Ringe der mittleren Bleche im Bereich zwischen den nach radial außen ragenden Zähnen Lücken auf und weisen die inneren Ringe der äußeren Bleche im Bereich zwischen den nach radial außen ragenden Zähnen Material auf. Dadurch kann ein Sternpaket geschaffen werden, das besonders arm an magnetischer Streuung ist.

Die Schichtdicke und die Stapeldicke können nach Bedarf gewählt sein. Vorzugsweise liegt die Schichtdicke zwischen 20 µm und 400 µm und/oder liegt die Stapeldicke zwischen 200 µm und 1000 µm. In jedem Fall aber ist die Stapeldicke ein ganzzahliges Mehrfaches der Schichtdicke.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: das Herstellen von Schichten aus einer Paste,
- FIG 2: das Trocknen und Sintern von Schichten,
- FIG 3: die Herstellung eines Kleinstapels,
- FIG 4 und 5: Draufsichten auf Bleche,
- FIG 6: das Beschichten von Blechen mit einem Klebelack,
- FIG 7: einen Kleinstapel vor einem Konturieren,
- FIG 8: ein Detail des Kleinstapels von FIG 7,
- FIG 9: den Kleinstapel von FIG 7 nach dem Konturieren,
- FIG 10: das Detail von FIG 8 nach dem Konturieren des Kleinstapels,
- FIG 11: ein Sternteil,
- FIG 12: ein Sternpaket,
- FIG 13: ein bewickeltes Sternpaket,
- FIG 14: ein Jochteil,
- FIG 15: ein Jochpaket und
- FIG 16: den Fügeprozess von Sternpaket und Jochpaket.

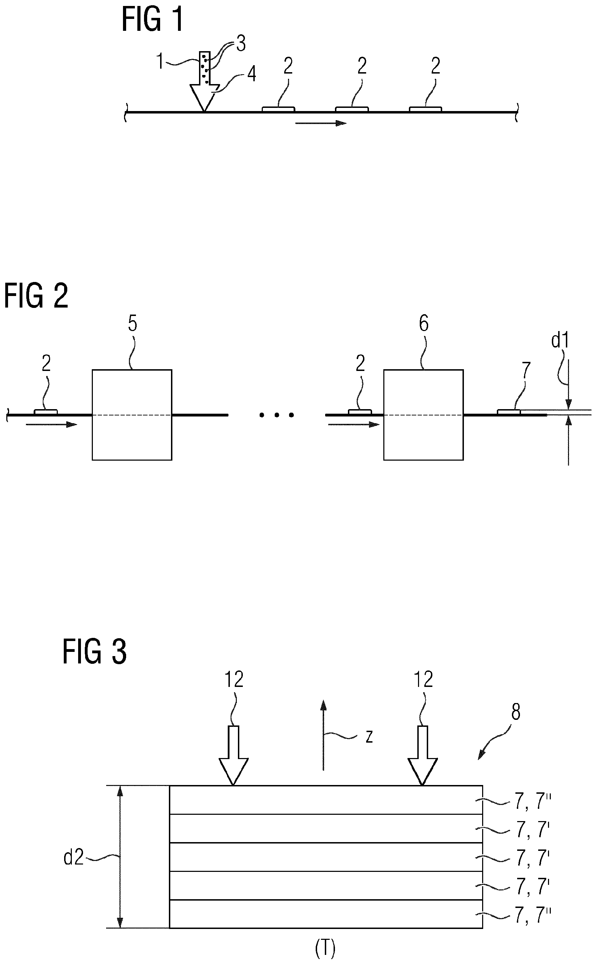

Gemäß FIG 1 werden zum Herstellen eines Stator-Joch-Pakets einer elektrischen Maschine zunächst aus einer Paste 1 Schichten 2 erzeugt. Die Paste 1 besteht aus weichmagnetischen Pulverpartikeln 3 und einem Bindemittel 4. Die Schichten 2 können beispielsweise gemäß einem Siebdruckverfahren hergestellt werden.

Die Schichten 2 werden nach dem Erzeugen zunächst getrocknet, beispielsweise gemäß FIG 2 in einem Trockenofen 5. Durch das Trocknen wird das Bindemittel 4 aus den Schichten 2 entfernt. Sodann werden die Schichten 2 gesintert, beispielsweise in einem Sinterofen 6. Durch das Sintern werden die Schichten 2 zu Blechen 7 mit einer Schichtdicke d1. Die Schichtdicke d1 kann beispielsweise zwischen 20 µm und 400 µm liegen.

Sodann werden gemäß FIG 3 mehrere Bleche 7 in einer Stapelrichtung z aufeinander gestapelt. Die Bleche 7 werden zu mehreren Kleinstapeln 8 verbunden. Die Kleinstapel 8 sind in aller Regel einheitlich aufgebaut und weisen eine jeweilige Stapeldicke d2 auf. Die Stapeldicke d2 liegt typischerweise zwischen 200 µm und 1000 µm. Da der jeweilige Kleinstapel 8 mehrere aufeinander gestapelte Bleche 7 umfasst, liegt die Stapeldicke d2 bei einem Mehrfachen der Schichtdicke d1.

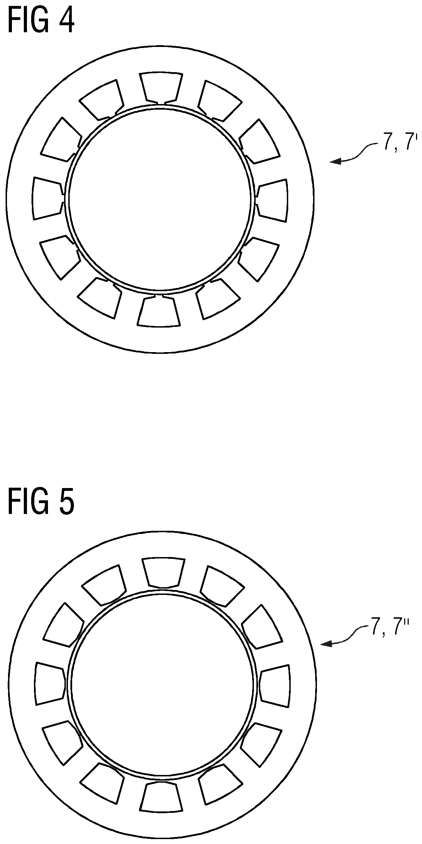

Es ist möglich, dass die Bleche 7 des jeweiligen Kleinstapels 8 eine einheitliche Kontur aufweisen. Vorzugsweise umfassen die Bleche 7 jedoch gemäß den FIG 4 und 5 zwei verschiedene Arten von Blechen 7, die voneinander verschiedene Konturen aufweisen. Die einen Bleche 7 werden nachstehend als mittlere Bleche 7' bezeichnet, die anderen Bleche als äußere Bleche 7". Soweit nicht zwischen den mittleren und den äußeren Blechen 7', 7" unterschieden werden muss, wird für die Bleche nachstehend das gemeinsame Bezugszeichen 7 verwendet. Sofern zwischen den mittleren und den äußeren Blechen unterschieden werden muss, wird für die Bleche das jeweilige Bezugszeichen 7' bzw. 7" verwendet.

Konkret weist der jeweilige Kleinstapel 8 in der Stapelrichtung z gesehen zunächst eine Anzahl von äußeren Blechen 7" auf, sodann eine Anzahl von mittleren Blechen 7' und schließlich wieder eine Anzahl von äußeren Blechen 7". Die Anzahlen können nach Bedarf bestimmt sein. Oftmals ist es ausreichend, wenn der jeweilige Kleinstapel 8 auf beiden Seiten von jeweils einem einzigen äußeren Blech 7" oder zwei äußeren Blechen 7" begrenzt wird, zwischen denen einige wenige mittlere Bleche 7' angeordnet sind, beispielsweise zwischen drei und acht mittlere Bleche 7'. Die genannten Zahlenwerte sind nur rein beispielhaft.

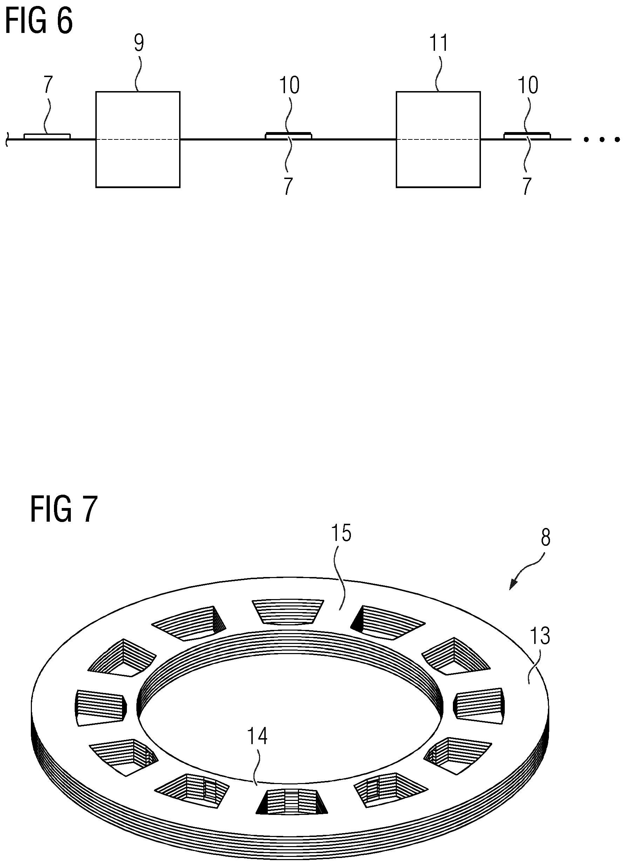

Die Bleche 7 werden zum Verbinden zu dem jeweiligen Kleinstapel 8 vorzugsweise nicht verformt. Sie sind also anfangs plan, bleiben beim Verbinden plan und weisen auch nach dem Verbinden zu dem jeweiligen Kleinstapel 8 weder Vertiefungen noch Erhöhungen auf. sind also immer noch plan. Beispielsweise können die Bleche 7 gemäß FIG 6 in einer Beschichtungseinrichtung 9 mit einem Klebelack 10 beschichtet werden. Der Klebelack 10 wird in der Regel nur einseitig auf die Bleche 7 aufgebracht. Er kann aber auch beidseitig auf die Bleche 7 aufgebracht werden. Der Klebelack 10 kann insbesondere ein sogenannter Backlack sein. Der Klebelack 10 wird gemäß FIG 6 getrocknet, beispielsweise in einem (weiteren) Trockenofen 11. In den Fällen, in denen die Bleche 7 mit dem Klebelack 10 beschichtet werden, erfolgt das Beschichten vor dem Stapeln der Bleche 7 zu dem Kleinstapel 8. Beim Stapeln der Bleche 7 zu dem Kleinstapel 8 sind die Bleche 7 also bereits mit dem Klebelack 10 beschichtet. Zwischen je zwei unmittelbar aneinander angrenzenden Blechen 7 befindet sich somit also mindestens eine Schicht des Klebelacks 10.

Gemäß FIG 3 werden die Bleche 7, nachdem sie aufeinandergestapelt sind, aneinander angedrückt. Das Andrücken kann beispielsweise mittels eines Stempels 12 erfolgen. In dem angedrückten Zustand kann dann der Klebelack 10 aktiviert werden, beispielsweise durch Erwärmen des Kleinstapels 8 auf eine Temperatur T. Nach dem Aktivieren - beispielsweise nach den Erwärmen und wieder Abkühlen - sind die Bleche 7 fest miteinander zu dem Kleinstapel 8 verbunden. Auch in diesem Zustand, in dem die Bleche 7 miteinander geklebt sind, sind die Bleche 7 weiterhin plan, also nicht verformt.

FIG 7 zeigt perspektivisch einen einzelnen Kleinstapel 8. Erkennbar weist der Kleinstapel 8 einen äußeren Ring 13 und einen inneren Ring 14 auf, die über Streben 15 miteinander verbunden sind. Der äußere Ring 13 weist eine relativ große Breite auf. Er bildet später eine Scheibe des Jochs des Stern-Joch-Pakets. Der innere Ring 14 und die Streben 15 bilden später eine Scheibe des Sterns des Stern-Joch-Pakets. Der innere Ring 14 weist eine relativ kleine Breite auf. Die Breite des inneren Rings 14 muss nur so groß sein, dass die mechanische Verbindung der Streben 15 über den inneren Ring 14 gegeben ist und auch erhalten bleibt. Die Streben 15 werden nachstehend entsprechend ihrer späteren Funktion als Zähne bezeichnet. Sie ragen von dem inneren Ring 14 nach radial außen.

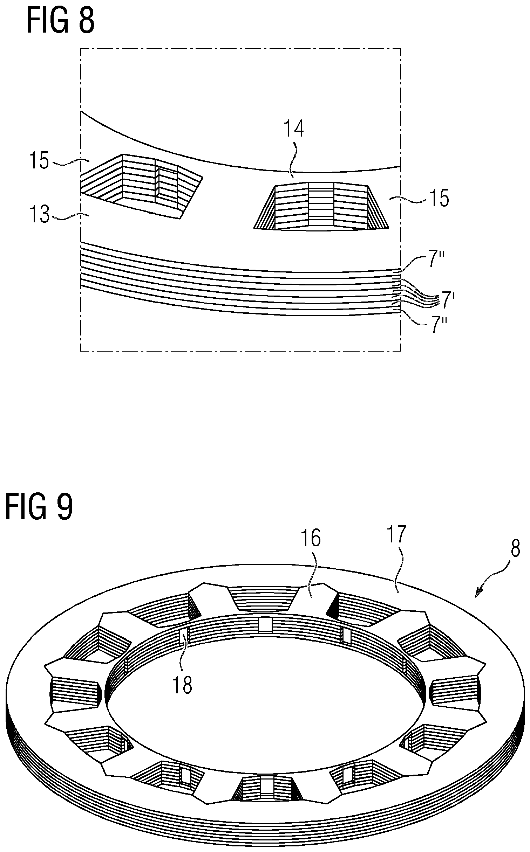

FIG 8 zeigt ein Detail von FIG 7. Aus FIG 8 ist insbesondere erkennbar, dass die inneren Ringe 14 der mittleren Bleche 7' im Bereich zwischen den Zähnen 15 einen kleineren Querschnitt aufweisen als die inneren Ringe 14 der äußeren Bleche 7".

Der Kleinstapel 8 der FIG 7 und 8 muss, bevor er endgültig verwendet werden kann, noch konturiert werden. Zu diesem Zweck wird der Kleinstapel 8 materialabtragend bearbeitet. Weiterhin muss der Kleinstapel 8 in ein Sternteil 16 und ein Jochteil 17 getrennt werden. Auch dieser Vorgang ist eine materialabtragende Bearbeitung. Beide Vorgänge können gemeinsam in einem einzelnen Arbeitsgang oder nacheinander in getrennten Arbeitsgängen ausgeführt werden. Die Ausführung kann konventioneller Natur sein.

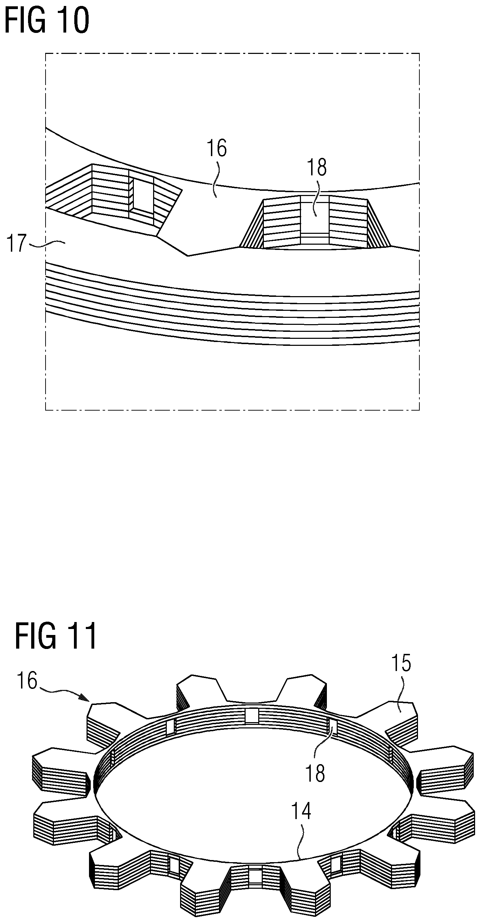

Die FIG 9 und 10 zeigen den Kleinstapel 8 nach dem Konturieren und dem Einbringen der Trennungen zwischen dem Sternteil 16 und dem Jochteil 17. Die Darstellungen der FIG 9 und 10 korrespondieren mit den FIG 7 und 8 mit Ausnahme des Umstands, dass der Kleinstapel 8 bereits konturiert ist und auch die Trennungen bereits eingebracht sind. Erkennbar wird der Kleinstapel 8 durch das Konturieren so weit materialabtragend bearbeitet, dass die inneren Ringe 14 der mittleren Bleche 7' im Bereich zwischen den Zähnen 15 vollständig abgetragen werden. Dadurch weisen die inneren Ringe 14 der mittleren Bleche 7' im Bereich zwischen den Zähnen 15 Lücken 18 auf. Die inneren Ringe 14 der äußeren Bleche 7" hingegen werden im Bereich zwischen den Zähnen 15 nicht vollständig abgetragen. Dadurch weisen die inneren Ringe 14 der äußeren Bleche 7" im Bereich zwischen den Zähnen 15 Material auf. Der Umstand, dass die mittleren Bleche 7' und die äußeren Bleche 7" voneinander verschiedene Konturen aufweisen, ist damit auch nach dem Konturieren gegeben.

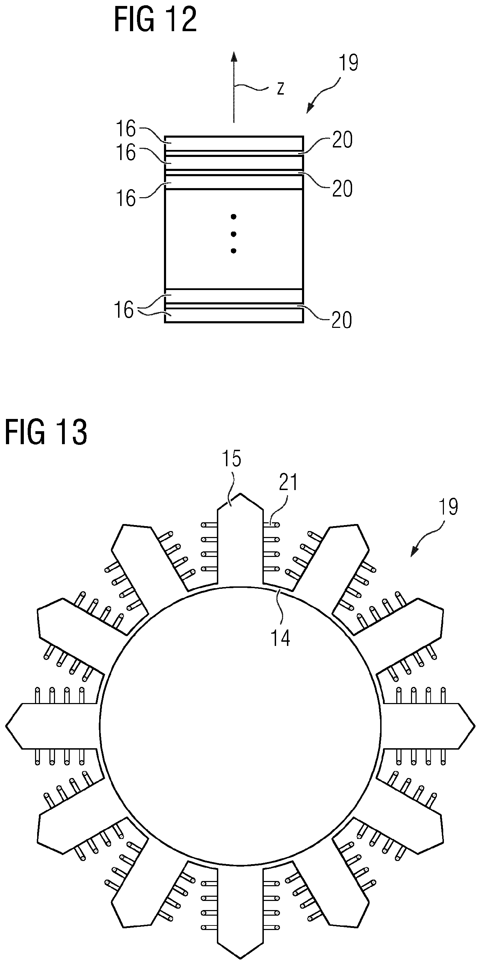

FIG 11 zeigt isoliert ein aus einem der Kleinstapel 8 hergestelltes Sternteil 16. Die Sternteile 16 werden gemäß FIG 12 in der Stapelrichtung z zu einem Sternpaket 19 gestapelt. Die inneren Ringe 14 der Stirnteile 16 bilden einen inneren Ring des Sternpakets 19. Die Zähne 15 der Sternteile 16 bilden nach radial außen ragende Zähne des Sternpakets 19. Die gestapelten Sternteile 16 werden miteinander zu dem Sternpaket 19 verbunden. Beispielsweise können die Sternteile 16 im Rahmen der Stapelung zum Sternpaket 19 miteinander geklebt werden. Dies ist in FIG 12 durch (dünne) Klebeschichten 20 angedeutet. Die Vorgehensweise zum Kleben kann analog zum Kleben der Bleche 7 zu einem Kleinstapel 8 erfolgen. Es sind aber auch andere Arten der Verbindung möglich. Die Zähne des Sternpakets 19 werden mit einer Statorwicklung 21 bewickelt. FIG 13 zeigt diesen Zustand.

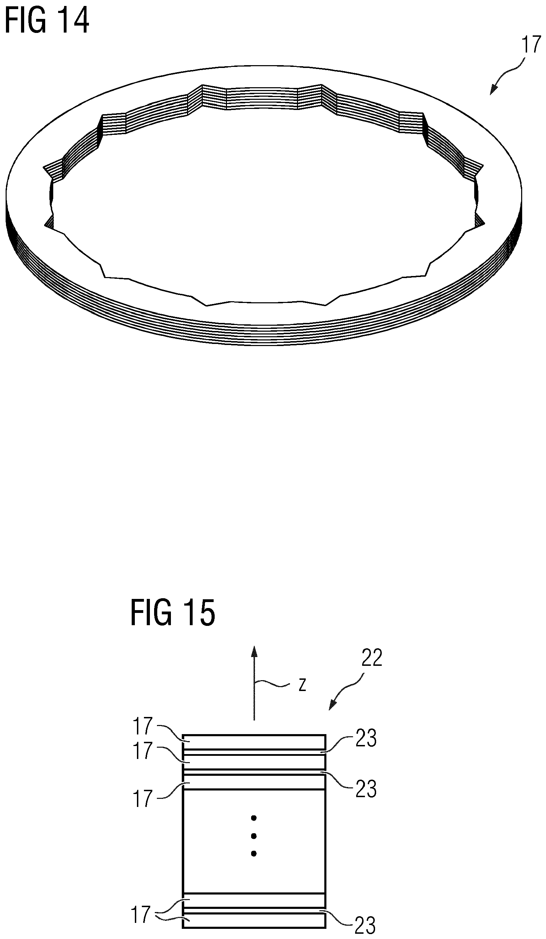

FIG 14 zeigt isoliert ein aus einem der Kleinstapel 8 hergestelltes Jochteil 17. Die Jochteile 17 werden gemäß FIG 15 in der Stapelrichtung z so einem Jochpaket 22 gestapelt. Die gestapelten Jochteile 17 werden miteinander zu dem Jochpaket 22 verbunden. Die Vorgehensweise kann analog zum Herstellen des Sternpakets 19 aus den Sternteilen 16 sein. Insbesondere können die Jochteile 17 im Rahmen der Stapelung zum Jochpaket 22 miteinander geklebt werden. Dies ist in FIG 15 durch (dünne) Klebeschichten 23 angedeutet.

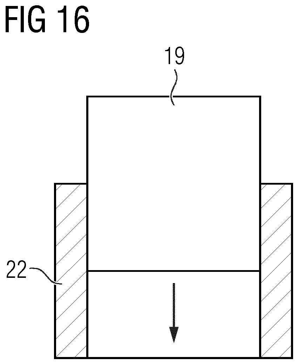

Das bewickelte Sternpaket 19 wird gemäß FIG 16 in das Jochpaket 22 eingeführt. Das Sternpaket 19 und das Jochpaket 22 werden also derart miteinander verbunden, dass das Jochpaket 22 das Sternpaket 19 radial außen umgibt. Hiermit ist die Herstellung des Stator-Joch-Pakets abgeschlossen.

Die vorliegende Erfindung weist viele Vorteile auf. Der größte Vorteil besteht darin, dass durch die Herstellung der Kleinstapel 8 aus mehreren relativ dünnen Blechen 7 eine hohe Steifigkeit der Kleinstapel 8 erzielt wird. Hierdurch vereinfachen sich insbesondere die weitere Handhabung im Rahmen der Herstellung des Stern-Joch-Pakets und die Konturierung der Kleinstapel 8.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Herstellungsverfahren für ein Stator-Joch-Paket einer elektrischen Maschine,
- wobei Sternteile (16) in einer Stapelrichtung (z) zu einem Sternpaket (19) mit einem inneren Ring und einem von dem inneren Ring nach radial außen ragenden Zähnen gestapelt werden und Jochteile (17) in der Stapelrichtung (z) zu einem Jochpaket (22) gestapelt werden,
- wobei nach einem Bewickeln der nach radial außen ragenden Zähne mit einer Statorwicklung (21) das Sternpaket (19) und das Jochpaket (22) miteinander verbunden werden, so dass das Jochpaket (22) das Sternpaket (19) radial außen umgibt,
**dadurch gekennzeichnet,**
- **dass** aus einer Paste (1), die aus weichmagnetischen Pulverpartikeln (3) und einem Bindemittel (4) besteht, Schichten (2) erzeugt werden,
- **dass** die Schichten (2) getrocknet und sodann gesintert werden, so dass die Schichten (2) jeweils ein Blech (7, 7', 7") mit einer Schichtdicke (d1) bilden,
- **dass** die Bleche (7, 7', 7") zu Kleinstapeln (8) mit einer jeweiligen Stapeldicke (d2) verbunden werden, wobei der jeweilige Kleinstapel (8) in der Stapelrichtung (z) mehrere aufeinander gestapelte Bleche (7, 7', 7") umfasst, und
- **dass** die Kleinstapel (8) durch materialabtragende Bearbeitung konturiert und in die Sternteile (16) und die Jochteile (17) getrennt werden.

2. Herstellungsverfahren nach Anspruch 1,
**dadurch gekennzeichnet,**
**dass** die Bleche (7, 7', 7") zum Verbinden zu dem jeweiligen Kleinstapel (8) nicht verformt werden.

3. Herstellungsverfahren nach Anspruch 2,
**dadurch gekennzeichnet,**
**dass** zum Verbinden mehrerer Bleche (7, 7', 7") zu dem jeweiligen Kleinstapel (8)
- die Bleche (7, 7', 7") jeweils mindestens einseitig mit einem Klebelack (10), beispielsweise einem Backlack, beschichtet werden,
- der Klebelack (10) getrocknet wird,
- die mit dem Klebelack (10) beschichteten Bleche (7, 7', 7") aufeinander gestapelt und aneinander angedrückt werden und
- der Klebelack (10) aktiviert wird, beispielsweise durch Erwärmen.

4. Herstellungsverfahren nach Anspruch 1, 2 oder 3,
**dadurch gekennzeichnet,**
**dass** die Sternteile (16) und die Jochteile (17) im Rahmen der Stapelung zum Sternpaket (19) und zum Jochpaket (22) miteinander geklebt werden.

5. Herstellungsverfahren nach einem der obigen Ansprüche,
**dadurch gekennzeichnet,**
**dass** die Bleche (7, 7', 7") mittlere und äußere Bleche (7', 7") umfassen, dass die mittleren und die äußeren Bleche (7', 7") voneinander verschiedene Konturen aufweisen und dass die Kleinstapel (8) in der Stapelrichtung (z) gesehen jeweils zunächst eine Anzahl von äußeren Blechen (7"), sodann eine Anzahl von mittleren Blechen (7') und schließlich wieder eine Anzahl von äu-ßeren Blechen (7") aufweisen.

6. Herstellungsverfahren nach Anspruch 5,
**dadurch gekennzeichnet,**
**dass** bereits vor dem Konturieren der Kleinstapel (8) die inneren Ringe (14) der mittleren Bleche (7') im Bereich zwischen den nach radial außen ragenden Zähnen (15) einen kleineren Querschnitt aufweisen als die inneren Ringe (14) der äußeren Bleche (7").

7. Herstellungsverfahren nach Anspruch 5 oder 6,
**dadurch gekennzeichnet,**
**dass** die Kleinstapel (8) durch das Konturieren der Kleinstapel (8) so weit materialabtragend bearbeitet werden, dass die inneren Ringe (14) der mittleren Bleche (7') im Bereich zwischen den nach radial außen ragenden Zähnen (15) vollständig abgetragen werden und die inneren Ringe (14) der äußeren Bleche (7") im Bereich zwischen den nach radial außen ragenden Zähnen (15) nicht vollständig abgetragen werden.

8. Herstellungsverfahren nach einem der obigen Ansprüche,
**dadurch gekennzeichnet,**
**dass** die Schichtdicke (d1) zwischen 20 µm und 400 µm liegt und/oder die Stapeldicke (d2) zwischen 200 µm und 1000 µm liegt.

9. Stator-Joch-Paket einer elektrischen Maschine,
- wobei das Stator-Joch-Paket ein Sternpaket (19) mit einem inneren Ring und einem von dem inneren Ring nach radial außen ragenden Zähnen und ein das Sternpaket (19) radial außen umgebendes und mit dem Sternpaket (19) verbundenes Jochpaket (22) aufweist,
- wobei die nach radial außen ragenden Zähne mit einer Statorwicklung (21) bewickelt sind,
- wobei das Sternpaket (19) aus einer Mehrzahl von in einer Stapelrichtung (z) aufeinandergestapelten Sternteilen (16) besteht und das Jochpaket (22) aus einer Mehrzahl von in der Stapelrichtung (z) aufeinandergestapelten Jochteilen (17) besteht,
**dadurch gekennzeichnet,**
- **dass** die Sternteile (16) und die Jochteile (17) jeweils mehrere in der Stapelrichtung (z) aufeinander gestapelte und miteinander verbundene Bleche (7, 7', 7") umfassen und eine jeweilige Stapeldicke (d2) aufweisen und
- **dass** die Bleche (7, 7', 7") jeweils aus weichmagnetischen Pulverpartikeln (3) bestehen, die durch Sintern miteinander verbunden sind und eine Schichtdicke (d1) aufweisen.

10. Stator-Joch-Paket nach Anspruch 9,
**dadurch gekennzeichnet,**
**dass** die Bleche (7, 7', 7") des jeweiligen Sternteils (16) bzw. des jeweiligen Jochteils (17) nicht verformt sind.

11. Stator-Joch-Paket nach Anspruch 10,
**dadurch gekennzeichnet,**
**dass** die Bleche (7, 7', 7") des jeweiligen Sternteils (16) bzw. des jeweiligen Jochteils (17) miteinander geklebt sind.

12. Stator-Joch-Paket nach Anspruch 9, 10 oder 11,
**dadurch gekennzeichnet,**
**dass** die Sternteile (16) und die Jochteile (17) miteinander geklebt sind.

13. Stator-Joch-Paket nach einem der Ansprüche 9 bis 12,
**dadurch gekennzeichnet,**
**dass** die Bleche (7, 7', 7") der Sternenteile (16) mittlere und äußere Bleche (7', 7") umfassen, dass die mittleren und die äußeren Bleche (7', 7") voneinander verschiedene Konturen aufweisen und dass die Sternteile (16) in der Stapelrichtung (z) gesehen jeweils zunächst eine Anzahl von äußeren Blechen (7"), sodann eine Anzahl von mittleren Blechen (7') und schließlich wieder eine Anzahl von äußeren Blechen (7") aufweisen.

14. Stator-Joch-Paket nach Anspruch 13,
**dadurch gekennzeichnet,**
**dass** die inneren Ringe (14) der mittleren Bleche (7') im Bereich zwischen den nach radial au-ßen ragenden Zähnen (15) Lücken (18) aufweisen und die inneren Ringe (14) der äußeren Bleche (7") im Bereich zwischen den nach radial außen ragenden Zähnen (15) Material aufweisen.

15. Stator-Joch-Paket nach einem der Ansprüche 9 bis 14,
**dadurch gekennzeichnet,**
**dass** die Schichtdicke (d1) zwischen 20 µm und 400 µm liegt und/oder die Stapeldicke (d2) zwischen 200 µm und 1000 µm liegt.
